# EUROPÄISCHE PATENTSCHRIFT

(11) **EP 1 794 463 B1**
(45) Veröffentlichungstag und Bekanntmachung des Hinweises auf die Patenterteilung: **02.06.2010**
(21) Anmeldenummer: 05760901.8
(22) Anmeldetag: 05.07.2005
(51) Int. Cl.: F16B 21/06, H05K 5/00, H05K 5/02, E05B 55/00, H01M 2/10

(54) **VORRICHTUNG ZUM VERRIEGELN VON ELEKTROGERÄTEN, INSBESONDERE VON ELEKTROWERKZEUGEN, MIT BATTERIEPACKS ZUR STROMVERSORGUNG**
DEVICE FOR LOCKING ELECTRIC APPLIANCES IN PARTICULAR ELECTRIC TOOLS WITH BATTERY PACKS FOR POWER SUPPLY
DISPOSITIF POUR VERROUILLER DES APPAREILS ELECTRIQUES, EN PARTICULIER DES OUTILS ELECTRIQUES, SUR DES BLOCS BATTERIE D'ALIMENTATION

(30) Priorität: 10.09.2004 DE 102004043827
(43) Veröffentlichungstag der Anmeldung: 13.06.2007
(60) Teilanmeldung: 09100114.9
(73) Patentinhaber: ROBERT BOSCH GMBH, 70442 Stuttgart (DE)
(72) Erfinder: REJMAN, Marcin, 71322 Waiblingen (DE); MATTHIAS, Wolf, 70469 Stuttgart (DE); ROTH, Urs, 4534 Flumenthal (CH)
(86) Internationale Anmeldenummer: PCT/EP2005/053191
(87) Internationale Veröffentlichungsnummer: WO 2006/027284

(56) Entgegenhaltungen:
- EP-A- 0 494 505
- DE-U1- 20 116 741
- US-B1- 6 168 881

## Beschreibung

Die Erfindung betrifft ein System gemäβ dem Oberbegriff des Anspruchs 1, welches eine Vorrichtung zum Verriegeln von Elektrogeräten, insbesondere von Elektrowerkzeugen, mit einen Batteriepack zur Stromversorgung umfasst.

Der hier verwendete Begriff Batteriepack soll auch Akkupacks umfassen, die wiederaufladbare Batterien (Akkus) enthalten.

### Stand der Technik

Insbesondere große und schwere handgeführte Elektrowerkzeuge, wie Bohrhämmer oder dergleichen, weisen zur Befestigung eines zur Stromversorgung dienenden Batteriepacks eine Vorrichtung der eingangs genannten Art mit einer als Doppelverriegelung bezeichneten zweistufigen Verriegelung auf. Bei älteren Geräten ist dort in einem Gehäuse des Elektrowerkzeugs ein Riegel vorgesehen, der entgegen der Kraft einer Feder beweglich ist. Der Riegel tritt nacheinander mit zwei Rastnuten im Batteriepack in Eingriff, die in Richtung der Relativbewegung während der Anbringung des Batteriepacks hintereinander in einem dem Riegel gegenüber liegenden Teil desselben ausgespart sind. Die vordere Rastnut, mit welcher der Riegel bei der Anbringung des Batteriepacks zuerst in Eingriff tritt, dient dort dazu, den Batteriepack so mit dem Gehäuse des Elektrowerkzeugs zu verbinden, dass er sich ohne eine manuelle Betätigung des Riegels nicht mehr vom Gehäuse lösen kann. Dadurch wird gewährleistet, dass der Batteriepack zum Beispiel zum Transport des Elektrowerkzeugs absturzsicher in dessen Gehäuse fixiert ist, jedoch noch kein

Kontakt zwischen den Anschlüssen des Batteriepacks und des Elektrowerkzeugs besteht. Dieser Kontakt wird erst dann hergestellt, wenn der Batteriepack vom Benutzer so weit ins Gehäuse des Elektrowerkzeugs eingeschoben wird, bis der Riegel in die hintere Rastnut eingreift, nachdem er zu Beginn dieser Einschubbewegung selbsttätig aus der vorderen Rastnut ausgerückt worden ist.

Aus der EP-A-0 494 505 und der US-A-6 168 881 sind eine Vorrichtung zum Verriegeln von Elektrogeräten mit Batteriepacks

Der Kontakt zwischen Batterien des Batteriepacks und einem Stromkreis eines Verbrauchers des Elektrogeräts wird dort immer nach dem Eingriff des Riegels in die in Bewegungsrichtung hintere Ausnehmung hergestellt.

Einerseits ist es ein Wunsch der Hersteller von verschiedenen batteriebetriebenen Elektrogeräten, zum einen die Batteriepacks so auszubilden, dass sie sich in allen Geräten verwenden lassen, und zum anderen auch die Geräte im Hinblick auf ihre Schnittstelle zum Batteriepack weitgehend zu standardisieren, indem im Wesentlichen derselbe Verriegelungsmechanismus bei allen Geräten verwendet wird. Andererseits ist zumeist nicht bei allen dieser Geräte eine Doppelverriegelung erwünscht, zum Beispiel weil diese bei Geräten mit kleinen und leichten Batteriepacks nicht benötigt wird oder weil bei einigen Geräten von den Kunden keine Doppelverriegelung erwartet und daher fälschlicherweise bereits beim Eingriff des Riegels oder der Riegel in die vordere Rastnut bzw. Rastnuten vom Zustandekommen eines ordnungsgemäßen Kontakts zwischen dem Elektrogerät oder dem Batteriepack ausgegangen wird.

Ausgehend hiervon liegt der Erfindung die Aufgabe zugrunde, eine Vorrichtung, ein Batteriepack und ein Elektrogerät der eingangs genannten Art dahingehend zu verbessern, dass wahlweise eine Einzel- oder eine Doppelverriegelung möglich ist oder eine Verriegelung wahlweise mit der vorderen oder der hinteren Ausnehmung möglich ist, wobei der Kontakt zwischen dem Batteriepack und dem Stromkreis eines Verbrauchers des Elektrogeräts entsprechend der gewünschten Verriegelung zu einem unterschiedlichen Zeitpunkt hergestellt werden kann.

Diese Aufgabe wird erfindungsgemäß durch die Merkmale im Kennzeichenteil des Anspruchs 1 gelöst.

### Vorteile der Erfindung

Dort, wo der Riegel einschließlich Betätigungseinrichtung, die im folgenden gemeinsam als Verriegelungsmechanismus bezeichnet werden, in herkömmlicher Weise im Elektrogerät untergebracht ist, während die Ausnehmungen für den Riegel im Batteriepack vorgesehen sind, bietet das erfindungsgemäße system mit den im Anspruch 1 genannten Merkmalen den Vorteil, dass bei Verwendung identischer Batteriepacks und eines Verriegelungsmechanismus mit einem in geeigneter Weise ausgebildeten oder positionierten Riegel die Möglichkeit geschaffen wird, wahlweise eine Einzel- oder Doppelverriegelung vorzusehen, oder, zum Beispiel aus Platzgründen, die endgültige Verriegelung wahlweise mit der vorderen oder mit der hinteren Ausnehmung vorzunehmen. Ein weiterer Vorteil besteht darin, dass sich darüber hinaus der Verriegelungsmechanismus, abgesehen vom Riegel selbst oder von seiner Montageposition im Gerät, bei allen Geräten standardisieren lässt.

Eine unterschiedliche Form der Ausnehmungen wird zweckmäßig dadurch erreicht, dass in einer der Ausnehmungen ein Vorsprung vorgesehen wird, vorzugsweise in Form einer die Ausnehmung teilenden Rippe, der den Eingriff eines Riegels mit einer zum Vorsprung komplementären Aussparung, vorzugsweise mit einem die Rippe aufnehmenden Schlitz gestattet, während der Eingriff eines Riegels ohne eine solche Aussparung verhindert wird. Die Aussparungen selbst sind wie beim Stand der Technik als Rastnuten ausgebildet.

Wenn bei einer Kombination von Elektrogerät und Batteriepack die Möglichkeit einer Doppelverriegelung vorgesehen werden soll, und bei zwei anderen Kombinationen von Elektrogerät und Batteriepack mit Einzelverriegelung die Verriegelung in einem Fall beim Eingriff des Riegels in die vordere Ausnehmung und im anderen Fall beim Eingriff des Riegels in die hintere Ausnehmung hergestellt werden soll, kann gemäß einer bevorzugten Ausgestaltung der Erfindung vorgesehen werden, zwei Ausnehmungen mit unterschiedlicher Form und unterschiedlichen Abmessungen oder zwei gegeneinander versetzte Ausnehmungen mit unterschiedlicher Form oder mit unterschiedlichen Abmessungen miteinander zu kombinieren.

Darüber hinaus ist es auch noch möglich, mehr als zwei in Bewegungsrichtung beim Verriegeln hintereinander angeordnete Ausnehmungen vorzusehen, von denen jede mit dem Riegel eines anderen Elektrogeräts in Eingriff tritt, um die Verriegelung vorzunehmen, wobei jeweils zwei der Ausnehmungen paarweise gemeinsam wirksam sein können, um eine Doppelverriegelung vorzunehmen.

### Zeichnungen

Die Erfindung wird nachfolgend in zwei Ausführungsbeispielen anhand der zugehörigen Zeichnungen näher erläutert. Es zeigen:
- Fig. 1:: eine Querschnittsansicht eines Teils einer Kombination von einem Elektrogerät und einem Batteriepack mit Doppelverriegelung nach einem teilweisen Einführen des Batterie-packs;
- Fig. 2:: eine Ansicht entsprechend Fig. 1, jedoch nach einem vollständigen Einführen des Batteriepacks;
- Fig. 3:: eine teilweise weggeschnittene auseinandergezogene perspektivische Ansicht von einer Seite des Batteriepacks in Verbindung mit dem Riegel des Elektrogeräts aus Fig. 1 und 2;
- Fig. 4:: eine Ansicht entsprechend Fig. 3, jedoch in Verbindung mit dem Riegel eines Elektrogeräts ohne Doppelverriegelung;
- Fig. 5:: eine vereinfachte Oberseitenansicht eines ähnlichen Batterie-packs in Verbindung mit drei perspektivisch dargestellten Riegeln von verschiedenen Elektrogeräten.

### Beschreibung der Ausführungsbeispiele

Bei der in der Zeichnung nur teilweise dargestellten Kombination von einem Elektrogerät 2, wie beispielsweise einem handgeführten Elektrowerkzeug, und einem als Stromversorgung für das Elektrogerät 2 dienenden Batteriepack 4 weist das Elektrogerät 2 in herkömmlicher Weise einen Sitz 6 für den Batteriepack 4 auf, in den dieser in Richtung des Pfeils A eingeschoben wird, um ihn einerseits sicher mit dem Elektrogerät 2 zu verbinden und andererseits eine elektrisch leitende Verbindung zwischen Anschlusskontakten 8 von Batterien des Batteriepacks 4 und einem Stromkreis des Verbrauchers (nicht dargestellt) des Elektrogeräts 2 herzustellen.

Um den Batteriepack 4 im Sitz 6 festzuhalten, weist ein Gehäuse 10 des Elektrogeräts 2 einen Verriegelungsmechanismus 12 auf, der beim Einführen des Batteriepacks 4 in den Sitz 6 eine Verriegelung desselben mit dem Gehäuse 10 bewirkt. Der Verriegelungsmechanismus 12 umfasst eine Mehrzahl von Riegeln, von denen bei 14 nur einer dargestellt ist. Der Riegel 14 ist starr mit einem nach außen über das Gehäuse 10 überstehenden Betätigungsschieber 16 verbunden und entgegen der Kraft einer Feder 18 in einer im Gehäuse 10 ausgesparten Führung 20 verschiebbar. Die Führung 20 ist in Bewegungsrichtung des Riegels 14 zum Sitz 6 hin offen, so dass ein freies Stirnende 22 des Riegels 14 bei unbetätigtem Schieber 16 in den Sitz 6 übersteht. Das Stimende 22 ist an seiner der Öffnung des Sitzes 6 zugewandten Seite angeschrägt, so dass beim Einführen des Batteriepacks 4 der Riegel 14 entgegen der Kraft der Feder 18 in die Führung 20 gedrückt wird.

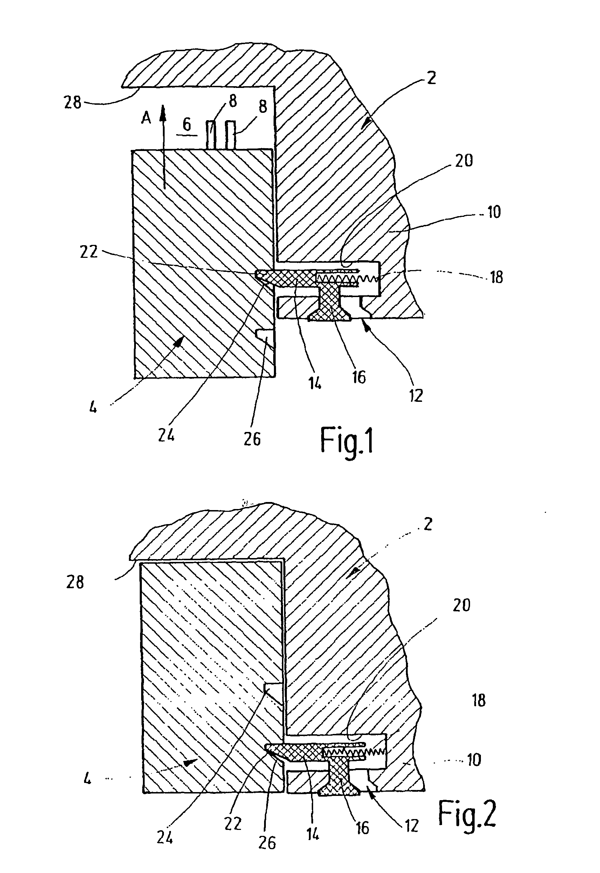

Außerdem ist der Batteriepack 4 in seiner der Führung 20 zugewandten Seite mit zwei Rastnuten 24 und 26 versehen, in die das Stirnende 22 des Riegels 14 nacheinander selbsttätig eingreift, wenn der Batteriepack 4 beim Einführen in den Sitz 6 die in Fig. 1 bzw. die in Fig. 2 dargestellte Stellung erreicht.

Die vordere Rastnut 24, in Bewegungsrichtung des Batteriepacks 4 beim Einführen bzw. Verriegeln gesehen, dient dazu, den Batteriepack 4 in der in Fig. 1 dargestellten Stellung mit dem Gehäuse 10 zu verriegeln, um zum Beispiel beim Transport ein Abstürzen des Batteriepacks 4 zu verhindern. In dieser Stellung greifen die Anschlusskontakte 8 des Batteriepacks 4 noch nicht in zugehörige, in einem Boden 28 des Sitzes 6 vorgesehene Aufnahmebuchsen (nicht sichtbar) des Elektrogeräts 2 ein, so dass noch keine elektrische Verbindung zwischen den Batterien des Batteriepacks 4 und dem Stromkreis des Verbrauchers des Elektrogeräts 2 besteht. Die hintere Rastnut 26 dient dazu, den Batteriepack 4 in der in Fig. 2 dargestellten Stellung mit dem Gehäuse 10 zu verriegeln, wo durch den Eingriff der Anschlusskontakte 8 in die Aufnahmebuchsen des Elektrogeräts 2 ein elektrischer Kontakt zwischen den Batterien und dem Stromkreis des Elektrogeräts 2 vorhanden ist. Die beiden Nuten 24 und 26 weisen eine an die Querschnittsform des vorderen Stirnendes 22 des Riegels 14 angepasste Querschnittsform auf und sind etwas breiter als der Riegel 14.

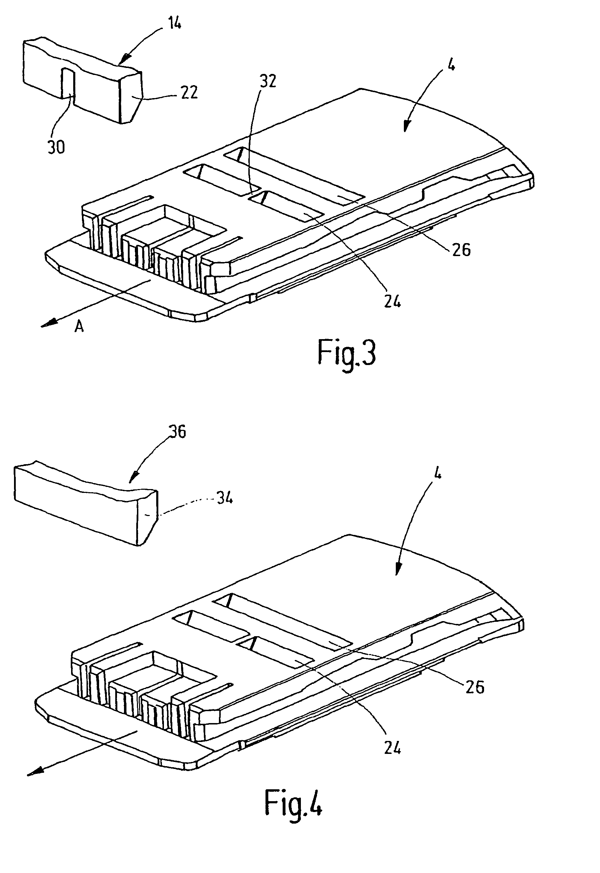

Wie am besten in Fig. 3 dargestellt, ist das mit den Nuten 24, 26 in Eingriff tretende Stimende 22 des Riegels 14 mit einem mittigen Schlitz 30 versehen, der sich mit gleichbleibenden Querschnittsabmessungen in Bewegungsrichtung des Batteriepacks 4 durch das Stimende 22 erstreckt. Von den beiden Nuten 24 und 26 erstreckt sich die hintere Nut 26 mit gleichbleibenden Querschnittsabmessungen über ihre gesamte Breite, während die vordere Nut 24 mit gleicher Breite in ihrer Mitte durch eine in Bewegungsrichtung des Batteriepacks verlaufende Rippe 32 unterbrochen ist. Die Rippe 32 liegt dem Schlitz 30 im Riegel 14 gegenüber und ist etwas schmaler als dieser, so dass das Stirnende 22 des Riegels 14 ungehindert sowohl in die erste und in die zweite Nut 24, 26 eingreifen kann, um die unter Bezugnahme auf Fig. 1 und 2 beschriebene Doppelverriegelung zwischen dem Elektrogerät 2 und dem Batteriepack 4 zu ermöglichen.

Während der in Fig. 4 dargestellte Batteriepack 4 mit dem Batteriepack aus den Figuren 1 bis 3 identisch ist, ist dort das vordere Stirnende 34 eines Riegels 36 eines ansonsten gleich oder ähnlich aufgebauten Verriegelungsmechanismus 12 eines anderen Elektrogeräts (nicht dargestellt) nicht mit dem Schlitz 30 versehen, so dass es sich über die vordere Nut 24 hinwegbewegt und erst mit der hinteren Nut 26 in Eingriff tritt. Die Verriegelung zwischen dem Batteriepack 4 erfolgt daher in Form einer Einzelverriegelung, bei der eine mechanische Verriegelung erst zusammen mit dem elektrischen Kontakt in der in Fig. 2 dargestellten Stellung des Batteriepacks 4 hergestellt wird.

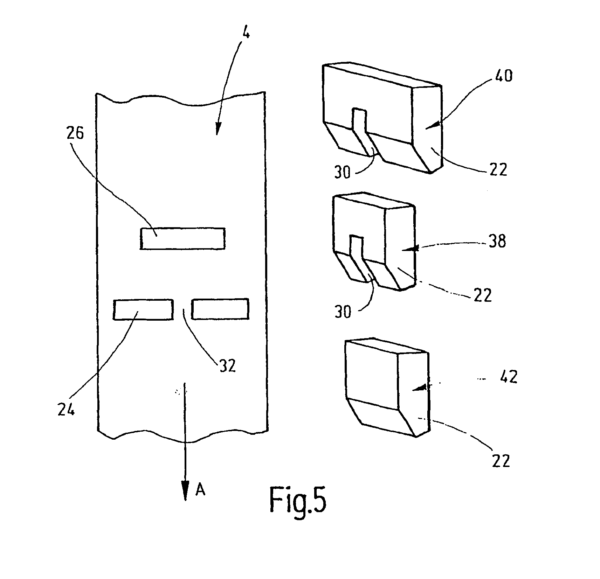

Im Unterschied zu dem zuvor beschriebenen Batteriepack 4 weisen die beiden Nuten 24 und 26 des in Fig. 5 schematisch in Draufsicht dargestellten Batteriepacks 4 zusätzlich quer zu dessen Bewegungsrichtung eine unterschiedliche Länge auf, wobei die hintere Nut 26 kürzer ist als die durch die Rippe 32 unterbrochene vordere Nut 24. Dadurch wird erreicht, dass der Verriegelungsmechanismus 12 eines Elektrogeräts 2 zum Zweck einer Doppelverriegelung mit beiden Nuten 24 und 26 in Eingriff tritt, wenn, wie bei dem mittleren Riegel 38 in Fig. 5, das vordere Stirnende 22 des Riegels 38 etwas schmaler als die Nut 26 ist und einen der Rippe 32 der Nut 24 gegenüberliegenden Schlitz 30 zur Aufnahme der Rippe 32 aufweist. Wenn hingegen wie bei dem oberen Riegel 40 in Fig. 5 das vordere Stimende 22 breiter als die Nut 26 ist und einen der Rippe 30 der Nut 24 gegenüberliegenden Schlitz 28 aufweist, tritt der Riegel nur mit der vorderen Nut 24 in Eingriff, während er nur mit der hinteren Nut 26 in Eingriff tritt, wenn sein vorderes Stimende 22 wie bei dem unteren Riegel 42 in Fig. 5 etwas schmaler ist als die Nut 26, jedoch nicht mit eine Schlitz 28 versehen ist. In beiden zuletzt genannten Fällen wird beim Eingriff des Riegels 40 bzw. 42 außer der mechanischen Verriegelung auch der elektrische Kontakt zwischen den Batterien des Batteriepacks 4 und dem Stromkreis des Verbrauchers des Elektrogeräts hergestellt.

## Patentansprüche

1. System aus zumindest zwei Elektrogeräten (2), insbesondere Elektrowerkzeugen, und einem Batteriepack (4) zur Stromversorgung der Elektrogeräte, umfassend eine Vorrichtung zum Verriegeln der Elektrogeräte mit dem Batteriepack, wobei die Elektrogeräte (2) einen beweglichen Riegel (14; 36; 38; 40; 42) und der Batteriepack (4) mindestens zwei Ausnehmungen (24, 26) aufweisen, wobei die Ausnehmungen (24, 26) in Richtung einer Relativbewegung zwischen Elektrogerät (2) und Batteriepack (4) beim Verriegeln hintereinander angeordnet sind, und der Riegel (14; 36; 38; 40; 42) nach dem Verriegeln in eine der Ausnehmungen (24; 26) eingreift, und wobei die Ausnehmungen (24, 26) als Rastnuten ausgebildet sind, **dadurch gekennzeichnet, dass** die Ausnehmungen (24, 26) unterschiedlich geformt oder unterschiedlich bemessen oder quer zur Bewegungsrichtung versetzt sind, und dass bei verschiedenen Kombinationen der Elektrogeräte (2) und des Batteriepacks (4) die Form, die Abmessungen bzw der Versatz der Ausnehmungen (24, 26) jeweils so an die Form, die Abmessungen oder die Position des Riegels (14; 36; 38; 40; 42) angepasst sind, dass der Riegel (14; 36; 38; 40; 42) entweder nur in die vordere Ausnehmung (24) oder nur in die hintere Ausnehmung (26) oder nacheinander zuerst in die vordere und dann in die hintere Ausnehmung (24, 26) eingreift.

2. System nach Anspruch 1, **dadurch gekennzeichnet, dass** bei einer Kombination von Elektrogerät (2) und Batteriepack (4) der Kontakt zwischen Batterien des Batteriepacks (4) und einem Stromkreis eines Verbrauchers des Elektrogeräts (2) beim Eingriff des Riegels (42) in die hintere Ausnehmung (26) und bei einer anderen Kombination von Elektrogerät und Batteriepack (4) beim Eingriff des Riegels (40) in die vordere Ausnehmung (24) hergestellt wird.

3. System nach Anspruch 1 oder 2, **dadurch gekennzeichnet, dass** in eine der Ausnehmungen (24) ein Vorsprung (32) ragt, der den Eingriff eines Riegels (14; 38; 40) mit einer den Vorsprung (32) aufnehmenden Aussparung (30) gestattet und den Eingriff eines Riegels (36; 42) ohne eine solche Aussparung (30) verhindert.

4. System nach Anspruch 3, **dadurch gekennzeichnet, dass** der Vorsprung eine Rippe (32) in der Ausnehmung (24) und die Aussparung ein Schlitz (30) im Riegel (14; 38; 40) ist.

5. System nach einem der vorangehenden Ansprüche, **dadurch gekennzeichnet, dass** die Ausnehmungen (24, 26) unterschiedlich geformt und unterschiedlich bemessen sind.

6. System nach einem der vorangehenden Ansprüche, **dadurch gekennzeichnet, dass** die Ausnehmungen unterschiedlich geformt und gegeneinander versetzt sind.

7. System nach einem der vorangehenden Ansprüche, **dadurch gekennzeichnet, dass** die Ausnehmungen unterschiedlich bemessen und gegeneinander versetzt sind.

8. System nach einem der vorangehenden Ansprüche, **dadurch gekennzeichnet, dass** die Riegel (14; 36; 38; 40; 42) in den Elektrogeräten (2) und die Ausnehmungen (24, 26) in den Batteriepacks (4) angeordnet sind.

## Claims

1. System comprising at least two electric devices (2), in particular electric tools, and a battery pack (4) for supplying power to the electric devices, comprising an apparatus for locking the electric devices to the battery pack, with the electric devices (2) having a moving locking bar (14; 36; 38; 40; 42) and the battery pack (4) having at least two recesses (24, 26), with the recesses (24, 26) being arranged one behind the other in the direction of a relative movement between the electric device (2) and the battery pack (4) during locking, and the locking bar (14; 36; 38; 40; 42) engaging in one of the recesses (24; 26) after locking, and with the recesses (24, 26) being in the form of latching grooves, **characterized in that** the recesses (24, 26) are of different shapes or different dimensions or are offset transverse to the direction of movement, and **in that**, given different combinations of the electric devices (2) and of the battery pack (4), the shape, the dimensions or the offset of the recesses (24, 26) are in each case matched to the shape, the dimensions or the position of the locking bar (14; 36; 38; 40; 42) such that the locking bar (14; 36; 38; 40; 42) engages either only in the front recess (24) or only in the rear recess (26) or successively first in the front recess (24) and then in the rear recess (26).

2. System according to Claim 1, **characterized in that** the contact between batteries of the battery pack (4) and an electrical circuit of a load of the electric device (2) is established when the locking bar (42) engages in the rear recess (26) given one combination of electric device (2) and battery pack (4), and when the locking bar (40) engages in the front recess (24) given another combination of electric device and battery pack (4).

3. System according to Claim 1 or 2, **characterized in that** a projection (32) projects into one of the recesses (24), the said projection allowing a locking bar (14; 38; 40) to engage with a cutout (30) which accommodates the projection (32) and prevents a locking bar (36; 42) from engaging without such a cutout (30).

4. System according to Claim 3, **characterized in that** the projection is a rib (32) in the recess (24) and the cutout is a slot (30) in the locking bar (14; 38; 40)

5. System according to one of the preceding claims, **characterized in that** the recesses (24, 26) have different shapes and different dimensions.

6. System according to one of the preceding claims, **characterized in that** the recesses have different shapes and are offset in relation to one another.

7. System according to one of the preceding claims, **characterized in that** the recesses have different dimensions and are offset in relation to one another.

8. System according to one of the preceding claims, **characterized in that** the locking bars (14; 36; 38; 40; 42) are arranged in the electric devices (2) and the recesses (24, 26) are arranged in the battery packs (4).

## Revendications

1. Système constitué d'au moins deux appareils électriques (2), en particulier des outils électriques, et d'un jeu de batteries (4) qui alimente les appareils électriques en courant, comprenant
un dispositif de verrouillage des appareils électriques sur le jeu de batteries,
les appareils électriques (2) présentant un verrou mobile (14; 36; 38; 40; 42) et le jeu de batteries (4) au moins deux découpes (24, 26),
les découpes (24, 26) étant disposées l'une derrière l'autre dans la direction de déplacement relatif entre l'appareil électrique (2) et le jeu de batteries (4) lors du verrouillage,
le verrou (14; 36; 38; 40; 42) s'engageant dans l'une des découpes (24; 26) après le verrouillage, les découpes (24, 26) étant configurées comme rainures d'encliquetage,
**caractérisé en ce que**
les découpes (24, 26) ont des formes différentes, des dimensions différentes ou sont décalées par rapport à la direction du déplacement,
**en ce qu'**en cas de différentes combinaisons des appareils électriques (2) et du jeu de batteries (4), la forme, les dimensions ou le décalage des découpes (24, 26) sont adaptés à la forme, aux dimensions ou à la position du verrou (14; 36; 38; 40; 42) de telle sorte que le verrou (14; 36; 38; 40; 42) s'engage uniquement dans la découpe avant (24) ou uniquement dans la découpe arrière (26) ou successivement d'abord dans la découpe avant et ensuite dans la découpe arrière (24, 26).

2. Système selon la revendication 1, **caractérisé en ce que** dans le cas d'une combinaison d'un appareil électrique (2) et d'un jeu de batteries (4), le contact entre les batteries du jeu de batteries (4) et le circuit du courant d'un consommateur de l'appareil électrique (2) est établi par l'engagement du verrou (42) dans la découpe arrière (26) et **en ce que** dans le cas d'une autre combinaison d'un appareil électrique et d'un jeu de batteries (4), il est établi par l'engagement du verrou (40) dans la découpe avant (24).

3. Système selon les revendications 1 ou 2,
**caractérisé en ce qu'**une saillie (32) pénètre dans une des découpes (24), permet l'engagement d'un verrou (14; 38; 40) dans une découpe (30) qui reçoit la saillie (32) et empêche qu'un verrou (36; 42) non muni de cette découpe (30) s'y engage.

4. Système selon la revendication 3, **caractérisé en ce que** la saillie est une nervure (32) ménagée dans la découpe (24) et la découpe une fente (30) ménagée dans le verrou (14; 38; 40).

5. Système selon l'une des revendications précédentes, **caractérisé en ce que** les découpes (24, 26) ont des formes différentes et ont des dimensions différentes.

6. Système selon l'une des revendications précédentes, **caractérisé en ce que** les découpes ont des formes différentes et sont décalées l'une par rapport à l'autre.

7. Système selon l'une des revendications précédentes, **caractérisé en ce que** les découpes ont des dimensions différentes et sont décalées l'une par rapport à l'autre.

8. Système selon l'une des revendications précédentes, **caractérisé en ce que** les verrous (14; 36; 38; 40; 42) sont disposés dans l'appareil électrique (2) et les découpes (24, 26) dans le jeu de batteries (4).
